# EUROPÄISCHE PATENTSCHRIFT

(11) **EP 2 582 570 B1**
(45) Veröffentlichungstag und Bekanntmachung des Hinweises auf die Patenterteilung: **06.08.2014**
(21) Anmeldenummer: 11779562.5
(22) Anmeldetag: 17.06.2011
(51) Int. Cl.: B62K 3/00, B62K 15/00, B62B 3/02

(54) **LASTEN- UND/ODER TRANSPORTROLLER**
LOAD AND/OR TRANSPORT SCOOTER
TROTTINETTE POUR LE TRANSPORT ET /OU LES CHARGES

(30) Priorität: 16.06.2011 DE 102011106561; 21.06.2010 DE 102010024674
(43) Veröffentlichungstag der Anmeldung: 24.04.2013
(73) Patentinhaber: Constin GmbH, 12159 Berlin (DE)
(72) Erfinder: CONSTIEN, Hans-Peter, 12159 Berlin (DE)
(74) Vertreter: Hannig, Wolf-Dieter
(86) Internationale Anmeldenummer: PCT/DE2011/001312
(87) Internationale Veröffentlichungsnummer: WO 2012/022279

(56) Entgegenhaltungen:
- DE-A1-102006 042 119
- US-B1- 6 651 993

## Beschreibung

Die Erfindung betrifft einen Lasten- und/oder Transportroller in Form eines Tretrollers, welcher mindestens drei Räder, einen Lenker, eine Ladeplattform und ein hochklapp- und arretierbares Trittbrett aufweist, wobei die beiden Fronträder mit einem Neigungsmechanismus bei Kurvenfahrt zur Aufnahme der Fliehkraft ausgestattet sind, und wobei der Lenker über zwei Lenksäulen mit der Ladeplattform fest verbunden ist.

### Stand der Technik

Es ist bekannt, dass Einkaufsroller eine große Hilfe zum Transport von gekauften Waren darstellen, ohne dass diese getragen werden müssen. Allerdings können die Einkaufsroller in der Regel nur mit Fußgängergeschwindigkeit bewegt werden, was den Aktionsradius dieser Roller sehr beschränkt.

Das Fahrrad mit Einkaufskorb bzw. Packtaschen vergrößert zwar den Aktionsradius für den Transport. Es ist jedoch zu sperrig und zum Transportieren schwerer Einkaufswaren wie z.B. Getränkekästen nicht geeignet. Auch herkömmliche Tretroller bzw. Kickboards sind dazu ungeeignet.

In der DE 10 2006 042 119 A1 ist ein Lastenroller beschrieben, der drei Räder, ein hochklappbares Trittbrett und eine frontseitige Ladefläche aufweist, auf der die schweren sperrigen Lasten geladen und transportiert werden können, wobei die Fronträder durch Kegelradgetriebe in Kurvenfahrt zur Fahrbahn geneigt werden können.

Aus der DE 20 2008 006 764 U1 ist weiterhin eine mit Rollen versehene Tragstruktur mit wenigstens einem an einem Gestänge angeordneten Griffelement zum Führen der Tragstruktur bekannt. Der Tragstruktur ist ein Rollbrett als Standbrett für den Benutzer zugeordnet. Das Griffelement ist als Lenkmittel für die Rollen vorgesehen, die bei der Lenkbewegung mit der Tragstruktur um eine quer zu ihrer wenigstens einen Achse stehenden Lenkachse drehbar angeordnet sind.

Des Weiteren sind mit drei Rädern versehene Lastenroller aus der FR 2 926 961 A1 und US 6 520 525 B1 bekannt.

All diesen bekannten Lösungen ist der Nachteil gemeinsam, dass die Roller über keinen eigenen Antrieb verfügen und somit nicht nur von ihrer Reichweite eingeschränkt, sondern auch für den Transport schwerer sperriger Lasten einen hohen Kraftaufwand erfordern oder sogar gar nicht dafür geeignet sind.

Ladeflächen, die vor den Fronträdern angeordnet sind (siehe FR 2 926 961 A1, WO 01/72164A1, EP 1 704 901 A1, WO 95/08466 A1, DE 102 04 478 A1, DE 81 28 047 U1) verlagern den Schwerpunkt der Last in eine für die Sicherheit des Rollers nicht immer ausreichende Lage, so dass der Benutzer die entsprechenden Gegenkräfte aufbringen muss, damit der Roller nicht nach vorn kippt.

### Aufgabenstellung

Bei diesem Stand der Technik liegt der Erfindung die Aufgabe zugrunde, ein Transport- und Lastenroller in Form eines Tretrollers bereitzustellen, der eine größere Reichweite bei gleichzeitigem sicheren Transport sperriger und schwerer Einkaufswaren mit Personen unter weiterer Verringerung der Baugröße, der Verbesserung des Handlings und der Reduzierung des Kraftaufwandes gewährleistet.

Diese Aufgabe wird durch einen Lasten- und/oder Transportroller der eingangs genannten Gattung mit den Merkmalen des Anspruchs 1 gelöst.

Vorteilhafte Ausgestaltungen des erfindungsgemäßen Lasten- und/oder Transportrollers sind den Unteransprüchen entnehmbar.

Die erfindungsgemäße Lösung geht von der Erkenntnis aus, das von der Last hervorgerufenes Kippmoment auf die Räder möglichst klein zu halten.

Dies wird dadurch erreicht, dass der
- Lasten- und/oder Transportroller unter der Ladeplattform eine dreiecksförmige Lenkplatte und darunter ein Vorderteil des Trittbretts aufweist,
- wobei die Lenkplatte
   - eine Bohrung, in der ein runder Zapfen des Vorderteils des Trittbretts liegt,
   - eine ringsegmentförmige Nut, in welcher ein Achsbolzen des Vorteils des Trittbretts liegt, wobei der Achsbolzen den Vorderteil des Trittbretts drehbar um eine Lenkachse mit der Ladeplattform verbindet,
   - ein Langloch, in welchem ein runder Führungszapfen der Ladeplattform liegt, und
   - zwei gegenüberliegende Kugelköpfe aufweist,
- wobei die Kugelköpfe jeweils in einem Lager an einem Ende des Lenkhebels gelenkig liegen, wobei diese jeweils an ihren anderen Enden ein Lager für einen weiteren Kugelkopf eine dreiecksförmigen Schwinge aufweisen, auf deren Achsschenkeln die Fronträder drehbar gelagert sind,
- wobei die Schwingen jeweils über Drehzapfen an der Ladeplattform drehbar gelagert sind,
   - so dass, wenn die Ladeplattform über den Lenker nach links bzw. rechts um die Lenkachse gelenkt wird, die Lenkplatte mit dem Kugelkopf auf die Lenkhebel drückt,
   - so dass der weitere Kugelkopf nach oben oder nach unten gedrückt wird,
   - so dass die Schwingen um die Drehzapfen nach oben oder unten gedrückt werden und damit die Fronträder um den gleichen Betrag aber entgegen gesetzter Richtung nach oben oder unten gedrückt werden,
   - so dass die beiden Fronträder bei der Lenkung gegenüber der Fahrbahn nach links oder rechts geneigt werden,
- wobei die Lenkachse vor einer gedachten Achse liegt und um den Lenkungswinkel von 45° nach links oder rechts ausgelenkt werden kann.

Von besonderem Vorteil ist, dass das Trittbrett bei der Fahrt durch einen Schieber starr mit seinem Vorderteil verbunden werden kann und dieses um die Achse seines Vorderteils um eine Klappstelle hochklappbar ist, wobei das so hochgeklappte Trittbrett durch eine eingebaute Gasdruckfeder und seitlich formschlüssig durch Anschläge in seiner Lage fest arretiert wird, wobei in diesem Zustand der Lenker über die Lenksäule nach vorn verstellt wird, wobei der fest eingebaute Lenker einen Handbogengriff zum Greifen und eine Querstange zur Versteifung der Lenksäulen aufweist, welche durch die Querstenge oben miteinander verbunden sind, wobei der Lenker in der Höhe stufenlos ver- und festgestellt werden kann, und dass das Trittbrett im Bedarfsfall ausgebaut und entfernt werden kann. Dies stellt sicher, dass der erfindungsgemäße Lasten- und/oder Transportroller eine kompakte Einheit für den eigenen Transport, beispielsweise in einem anderen Fahrzeug bilden kann.

Vorteilhaft ist weiterhin, dass an der Klappstelle des Trittbretts mindestens ein Stützrad oder ein Paar Stützräder vorgesehen ist, so dass beim hochgeklappten Trittbrett der Lasten- und/oder Transportroller noch auf drei oder vier Rädern stehen und bewegt werden kann.

In einer bevorzugten Ausführungsvariante des erfindungsgemäßen Lasten- und/oder Transportrollers weist das Hinterrad als Antriebsrad einen elektrischen Radnabenmotor auf, wobei der Lenker neben zwei Bremsen und einer Klingel noch mit einem Gashebel zum Regulieren der Leistung des elektrischen Radnabenmotors versehen ist, wobei das Regulieren durch einen Beschleunigungssensor funktioniert, der die Beschleunigung des Lastenrollers nur durch den Fußstoß des Fahrers misst und den Radnabenmotor einschaltet. Mit einem derartigen Antriebskonzept ist gewährleistet, dass nicht nur unterschiedliche Geschwindigkeiten entsprechend den Verkehrsverhältnissen für den Transport der Lasten und/oder Personen eingestellt werden können, sondern auch eine wesentlich größere Reichweite erzielt werden kann.

Eine weitere Ausführungsvariante des erfindungsgemäßen Lasten- und Transportrollers sieht vor, dass alle Räder des Lasten- und/oder Transportrollers elektrische Radnabenmotoren aufweisen.

Es gehört aber auch zu der Erfindung, wenn nur die beiden Fronträder mit elektrischen Radnabenmotoren ausgestattet sind, so dass der so gestaltete Lasten- und/oder Transportroller einen Frontantrieb besitzt, wobei mittels Elektronik in Abhängigkeit der Lenkung in der Kurve das innen liegende Rad langsamer als das außen liegende Rad dreht. Alternativ können aber auch die beiden Fronträder nur mit einem Motor angetrieben werden, der über ein Differenzialgetriebe mit den Rädern verbunden ist.

Damit kann der erfindungsgemäße Lasten- und/oder Transportroller variabel auf unterschiedliche Antriebsformen ausgelegt werden.

In weiterer Ausgestaltung des erfindungsgemäßen Lasten- und/oder Transportrollers weist das Hinterrad ein fest eingebautes Schutzblech und ein Zusatzschutzblech auf, welches über dem Schutzblech eingebaut und über Gestänge um die Hinterradachse drehbar gelagert ist, so dass die Reifen des Hinterrads bei hochgeklapptem Trittbrett durch Verschwenken des Zusatzschutzbleches verdeckt ist. Dies ermöglicht es, Verschmutzungen durch das Hinterrad zu vermeiden.

Von besonderem Vorteil ist weiterhin, dass der Lastenroller eine klapp- und in der Höhe verstellbare Abstütze für den Sitz des Fahrers aufweist, wobei diese Abstütze aus einem zwei Schenkeln, in der Mitte eine Lehne aufweisenden U-förmigen Bogen und zwei Rohrstangen besteht, in denen die Schenkel eingeschoben und in der Höhe verstell- und feststellbar sind, wobei die Rohrstangen in Lagerböcken drehbar gelagert sind, welche auf dem Trittbrett fest montiert sind, wobei die Rohrstangen in der senkrechten Position und in der geklappten Position feststellt sind, und dass anstelle der Lehne ein Sattel für den Sitz eingebaut werden kann.

Weitere Vorteile und Einzelheiten ergeben sich aus der nachfolgenden Beschreibung unter Bezugnahme auf die beigefügten Zeichnungen.

### Ausführungsbeispiel

Die Erfindung soll nachstehend an mehreren Ausführungsbeispielen näher erläutert werden.

Es zeigen
Fig. 1 eine Vorderansicht des Lastenrollers für Geradeausfahrt,
Fig. 2 eine vergrößerte Darstellung des Getriebes der Fronträder für Geradeausfahrt,
Fig. 3 eine Unteransicht des Lastenrollers für Geradeausfahrt,
Fig. 4 eine Explosionsdarstellung des Getriebes des Lastenrollers,
Fig. 5 eine Unteransicht des Lastenrollers mit Trittbrett für Geradeausfahrt,
Fig. 6 eine Unteransicht des Lastenrollers ohne Vorderteil des Trittbretts,
Fig. 7 eine Unteransicht des Lastenrollers ohne Vorderteil des Trittbretts bei 45°-Linkslenkung,
Fig. 8 eine Draufsicht des Lastenrollers ohne Ladeplattform bei 45°-Linkslenkung,
Fig. 9 eine Vorderansicht des Lastenrollers im gelenkten Zustand bei 45° nach links,
Fig. 10 eine Unteransicht des Lastenrollers im gelenkten Zustand bei 45° nach links,
Fig. 11 eine perspektivische Darstellung des Lastenrollers im gelenkten Zustand,
Fig. 12 eine Lenkerposition im Fahrzustand des Lastenrollers,
Fig. 13 eine Lenkerposition des Lastenrollers im Zustand als Einkaufsroller,
Fig. 14 eine Darstellung eines alternativen Lenkers mit einem in der Mitte vorgesehenen Handbogengriff,
Fig. 15 den Lastenroller gemäß Fig. 14 im hochgeklappten Zustand des Trittbretts,
Fig. 16 einen Längsschnitt durch den Lastenroller,
Fig. 17 eine Draufsicht gemäß Fig. 14,
Fig. 18 eine Ansicht des Lastenrollers mit einem Zusatzschutzblech,
Fig. 19 den Lastenroller mit Zusatzschutzblech im geschlossenen Zustand,
Fig. 20 den Lastenroller mit einer verstell- und klappbaren Abstütze für den Fahrer im aufgeklappten Zustand,
Fig. 21 den Lastenroller gemäß Fig. 20 mit geschlossener Abstütze,
Fig. 22 eine Draufsicht des Lastenrollers gemäß Fig. 21
Fig. 23 eine perspektivische Darstellung des Lastenrollers im unbeladenen Zustand,
Fig. 24 eine perspektivische Darstellung des Lastenrollers mit einem Getränkekasten auf der Ladefläche,
Fig. 25 eine perspektivische Darstellung des Lastenrollers mit zwei übereinander gestapelten Getränkekästen auf der Ladefläche,
Fig. 26 eine perspektivische Darstellung des Lastenrollers mit einem Einkaufssack auf der Ladefläche,
Fig. 27 eine perspektivische Darstellung des Lastenrollers mit einem Babykorb auf der Ladefläche,
Fig. 28 eine Seitenansicht eines nicht zur Erfindung gehörenden Lastenrollers mit vorwärts fahrendem Hinterrad,
Fig. 29 den Lastenroller gemäß Fig. 28 im hochgeklappten Zustand,
Fig. 30 eine perspektivische Darstellung gemäß Fig.28.

### 1. Ausführungsbeispiel

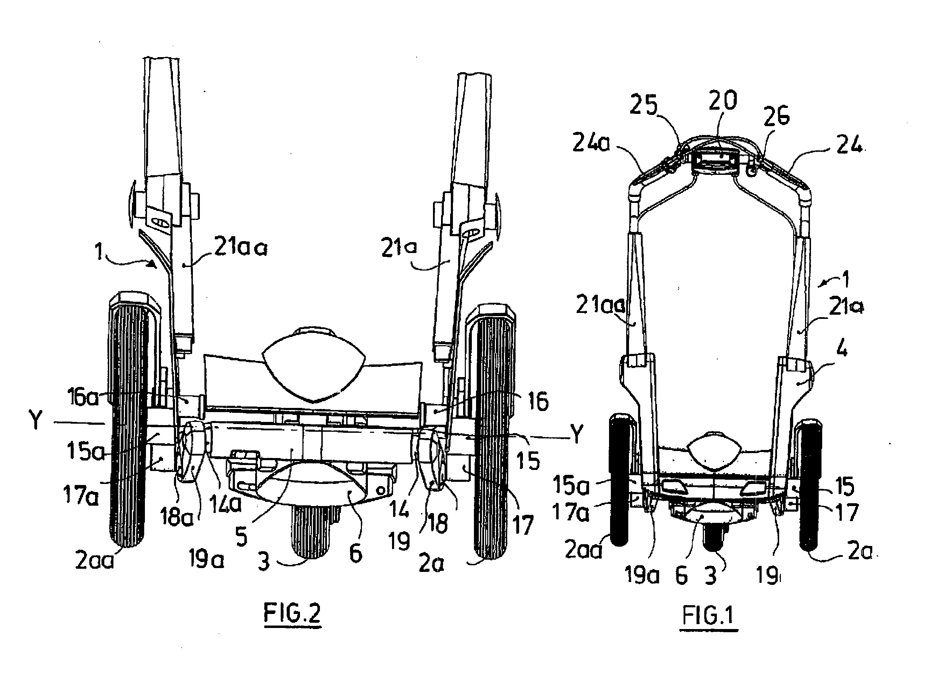

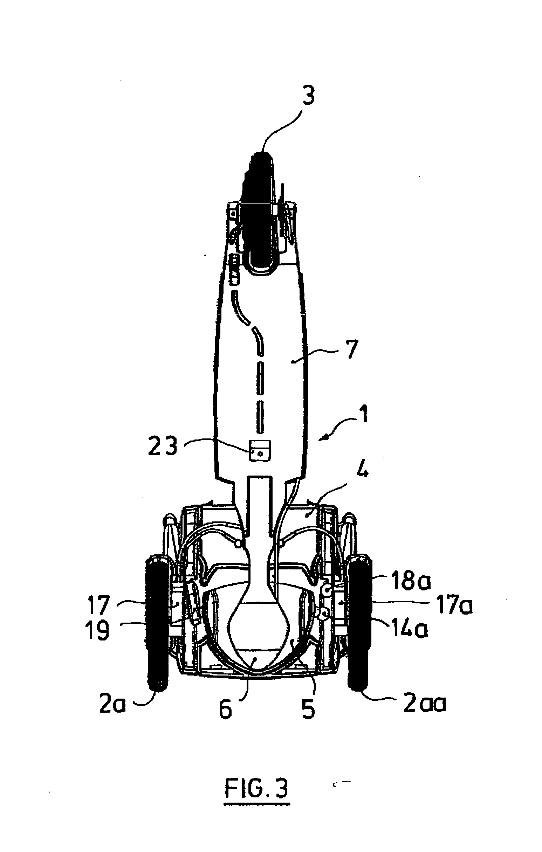

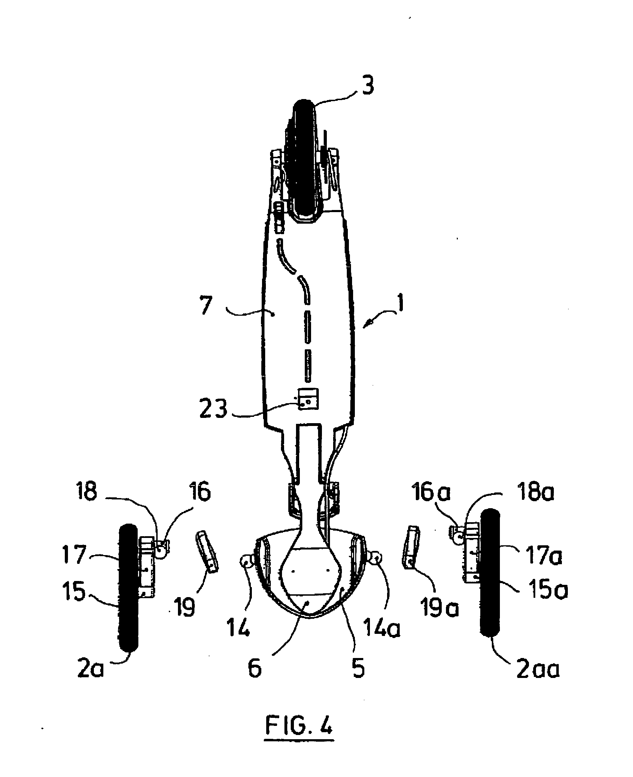

Die Fig. 1 bis 4 zeigen den grundsätzlichen Aufbau des erfindungsgemäßen Lasten- und/oder Transportrollers 1 mit den beiden Fronträdern 2a, 2aa und dem Hinterrad 3. Zwischen den beiden Fronträdern 2a und 2aa befindet sich die Ladeplattform 4. Unter der Ladeplattform 4 ist eine dreieckförmige Lenkplatte 5 angeordnet, unter der sich der Vorderteil 6 des Trittbretts 7 befindet. Die Ladeplattform 4 ist über einen Achsbolzen 8 mit dem Vorderteil 6 des Trittbretts 7 drehbar verbunden ist.

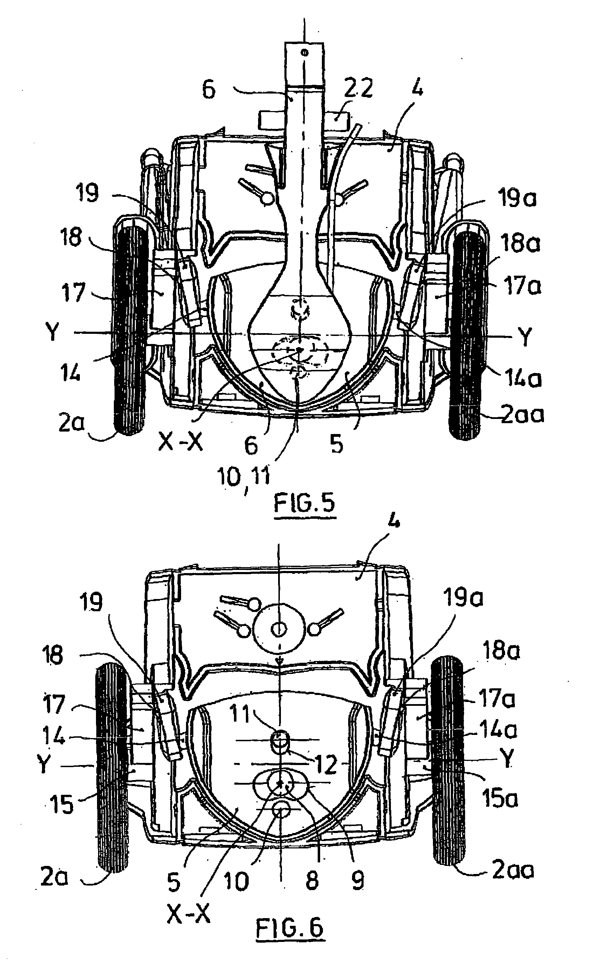

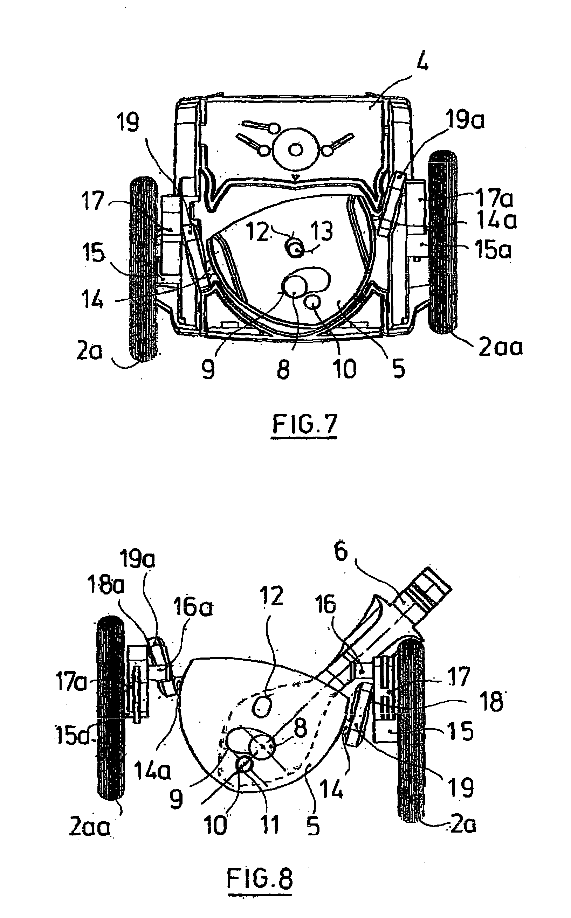

Die Lenkplatte 5 weist eine ringsegmentförmige Nut 9, in welcher der Achsbolzen 8 des Vorderteils 6 des Trittbretts 7 liegt, eine Bohrung 10, in der ein runder Zapfen 11 des Vorderteils 6 des Trittbretts 7 liegt, ein Langloch 12, in welchem der runde Führungszapfen 13 der Ladeplattform 4 liegt, und zwei, am Rande in hinteren Ecken gegenüber liegende Kugelköpfe 14 und 14a auf (siehe Fig. 5 bis 8).

Die beiden Fronträder 2a bzw. 2aa sind auf den Achsschenkeln 15 bzw. 15a der dreieckigen Schwinge 17 bzw. 17a drehbar gelagert, welche über einen Drehzapfen 16 bzw. 16a an der Ladeplattform 4 schwenkbar gelagert sind. Die Schwinge 17 bzw. 17a weist einen Kugelkopf 18 bzw. 18a auf. Der Lenkhebel 19 bzw. 19a verbindet den Kugelkopf 14 mit dem Kugelkopf 18 bzw. den Kugelkopf 14a mit dem Kugelkopf 18a, so dass das Frontrad 2a bzw. 2aa mit der Lenkplatte 5 gelenkig verbunden sind.

Der Lenker 20, welcher über die beiden Lenksäulen 21a und 21aa mit der Ladeplattform 4 fest verbunden sind, kann die beiden Fronträder 2a bzw. 2aa nach links oder rechts lenken, wobei die senkrechte Lenkachse X-X des Achsbolzens 8 vor der gedachten Achse Y-Y der beiden Fronträder 2a, 2aa liegt (siehe Fig. 6).

Der Neigungsmechanismus der beiden Fronträder 2a und 2aa bei Lenkung funktioniert wie folgt beschrieben. Da einerseits die Lenkplatte 5 über die Bohrung 10 auf dem Zapfen 10 am Vorderteil 6 des Trittbretts 7 schwenkbar gelagert ist und andererseits über das Langloch 12 am Führungszapfen 13 der Ladeplattform hin- und hergehend geschwenkt werden kann, bewegen sich die beiden Kugelköpfe 14 und 14a fast auf einer geraden Linie aber in gegensätzlicher Richtung, wenn bei der Lenkung in der Kurvenfahrt die Ladeplattform 4 gegenüber dem Vorderteil 6 des Trittbretts 7 z.B. nach rechts bzw. links gedreht wird. Der Kugelkopf 14a der Lenkplatte 5 bewegt sich nach vorn bzw. nach hinten und drückt über die Lenkhebel 19a und die Schwinge 17a das Frontrad 2a nach oben bzw. nach unten. Gleichzeitig bewegt sich aber der Kugelkopf 14 bzw. 14a der Lenkplatte 5 um den gleichen Betrag nach hinten bzw. nach vorn und drückt über den Lenkhebel 19 und die Schwinge 17 das Frontrad 2aa nach unten bzw. nach oben, sodass die Ladeplattform 4 gegenüber der Fahrbahn nach rechts bzw. nach links geneigt ist, wobei der Lenkwinkel der Lenkplatte 5 durch die ringsegmentförmige Nut 9 bis zum Anschlag durch den Achsbolzen 6 um 45° nach rechts und nach links beschränkt ist, wenn der Lastenroller durch die Fußstöße vorwärts gestoßen wird.

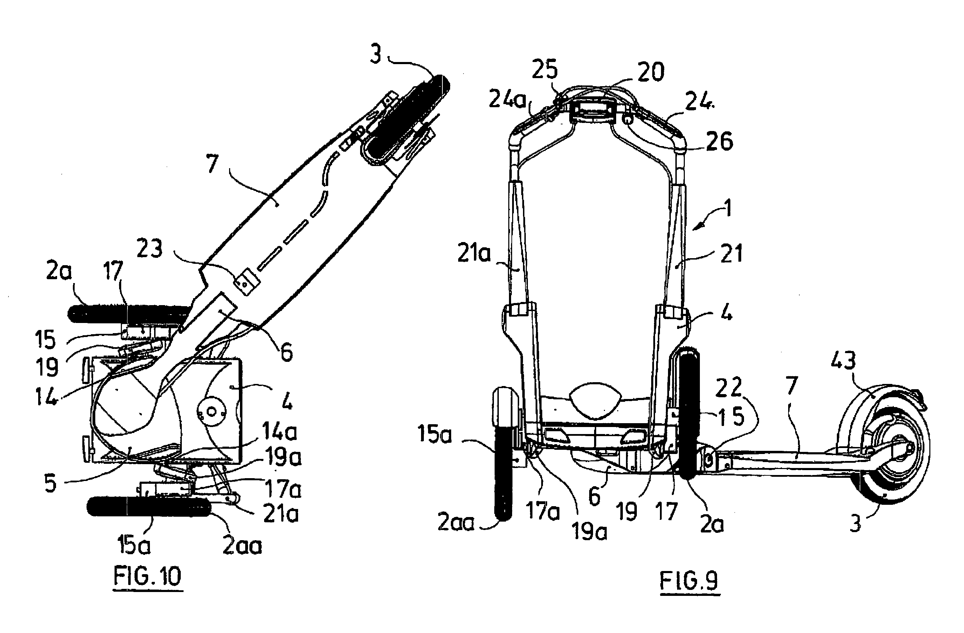

Durch das so ausgebildete Getriebe sind die beiden Fronträder 2a, 2aa bei Kurvenfahrt zur Fahrbahn geneigt, wodurch der Lastenroller 1 der in der Kurve wirkenden Fliehkraft entgegenwirken kann. Auf diese Weise lässt sich der beladene Lastenroller 1 sicher in der Kurve lenken (siehe Fig. 9 und 10).

Das Trittbrett 7, auf dem der Fahrer bequem mit einem Bein steht, ist mit dem Vorderteil 8 über eine Achse 22 gelenkig miteinander verbunden (Fig. 9 bis Fig. 13), so dass das Trittbrett 7 je nach Bedarf hochgeklappt oder zum Ausbauen getrennt werden kann. Beim Fahren ist das Trittbrett 7 über einen Schieber 23 starr mit dem Vorderteil 8 zu einer Einheit fest verbunden (Fig. 10).

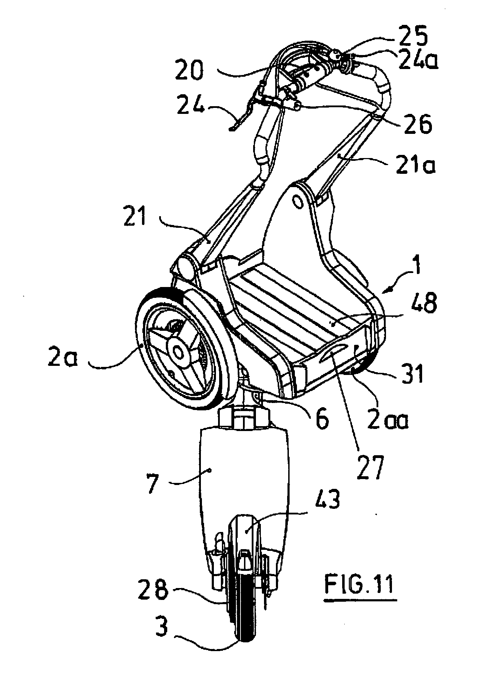

Aus der Fig. 11 ist die Lage des Kastens 31 für die Aufnahme der zur Stromversorgung des Radnabenmotors 28 vorgesehen Akkus 27 ersichtlich. Der Kasten 31 liegt unterhalb der Ladeplattform 48.

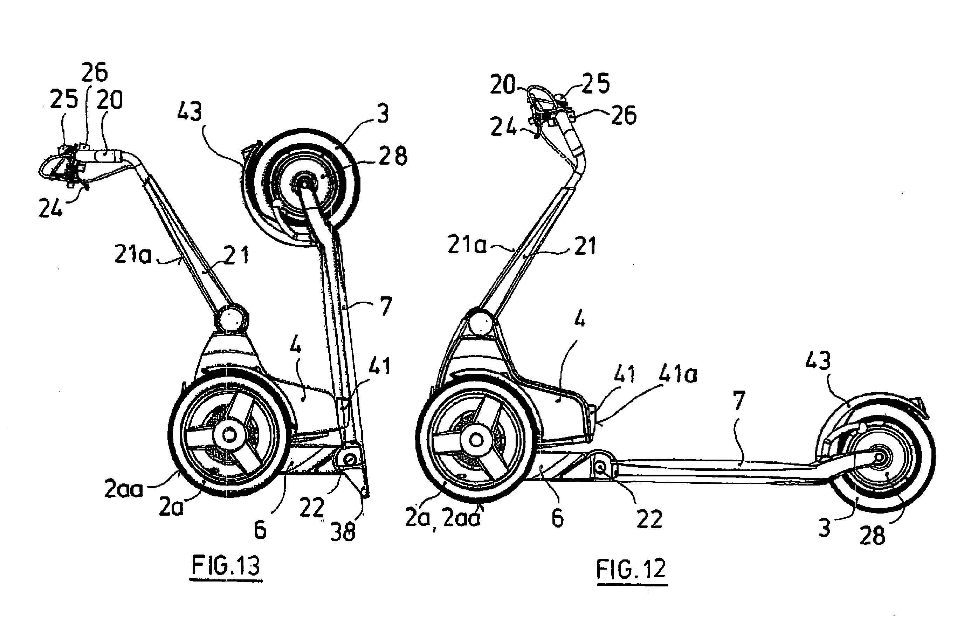

Die Fig. 12 zeigt die Position der arretierten Lenksäule 21a und 21aa im Fahrzustand, in dem der Fahrer den Lenker 20 bequem erfassen und die beiden Fronträder 2a und 2aa lenken kann. Für den Fall, dass der Lastenroller 1 als ein Einkaufsroller verwendet werden soll, lässt sich bei hochgeklapptem bzw. ausgebautem Trittbrett 7 die Lenksäule 21a und 21aa nach vorn verstellen und arretieren, wodurch sich der Einkaufsroller besser und bequem mit der Hand ziehen lässt.

Der Lenker 20 weist einen linken und einen rechten Handbremser 24a bzw. 24aa, eine Klingel 25 und einen Gashebel 26 auf, mit dem die Stromentnahme des Radnabenmotors 28 reguliert werden kann, der als Antriebsrad am Hinterrad 3 eingebaut ist (siehe Fig. 9 bis 13).

### 2. Ausführungsbeispiel

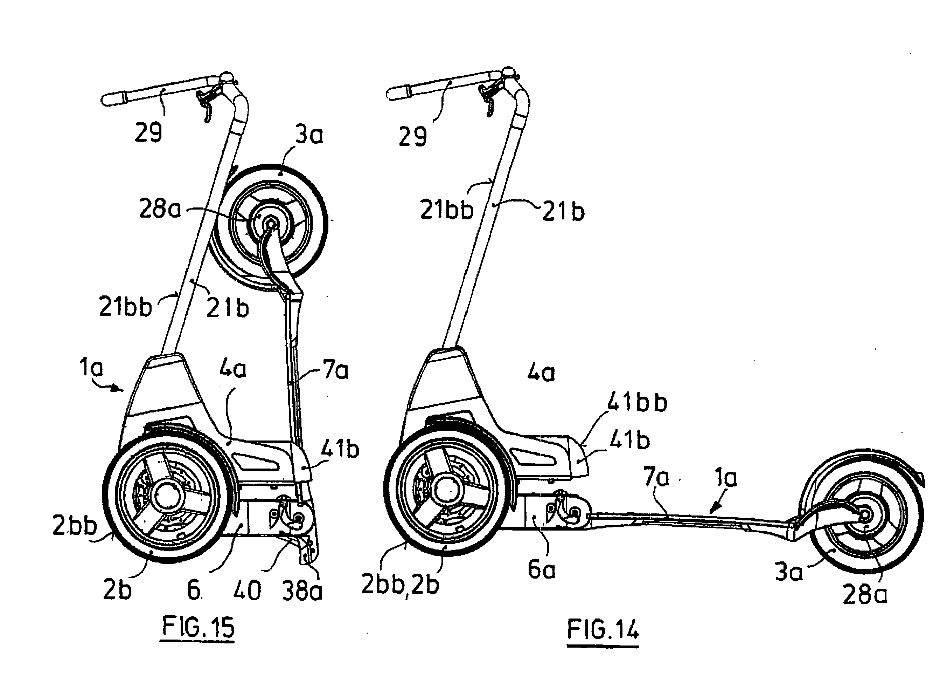

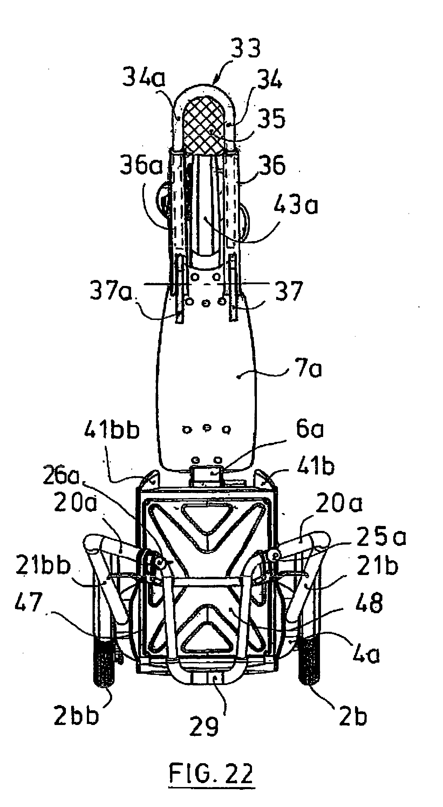

Die Fig. 14 bis 27 zeigen eine alternative Ausführung des erfindungsgemäßen Lasten- und/oder Transportrollers. Damit die Bezugszeichen, von denen des ersten Ausführungsbeispiels unterschieden werden können, erhalten die ansonsten gleichen Bezugszeichen eine zusätzliche Buchstabenkennung.

Die im ersten Ausführungsbeispiel beschriebene Anordnung von Ladeplattform, dreiecksförmiger Lenkplatte, Vorderteil des Trittbretts, Kugelköpfen und Schwingen bleibt erhalten.

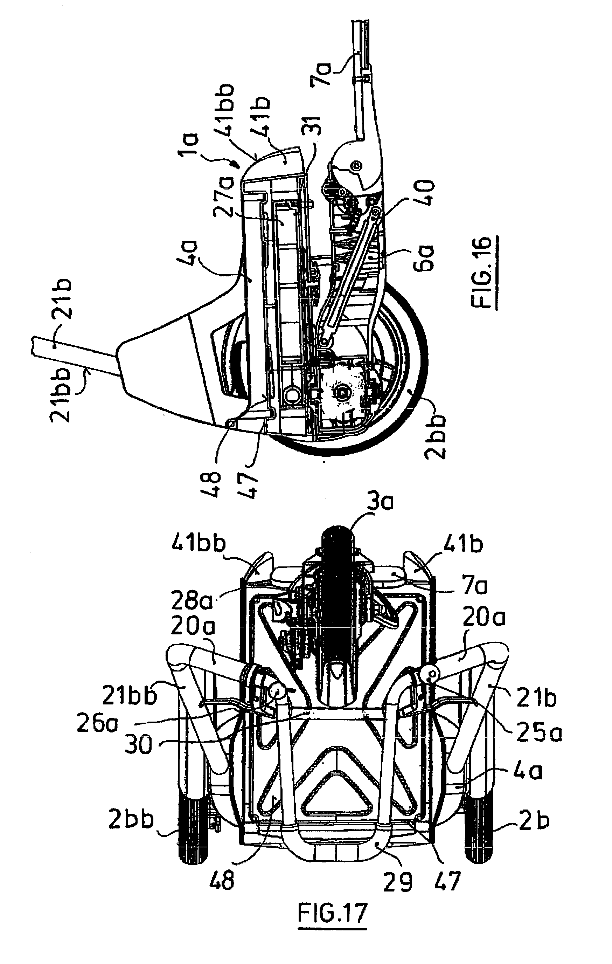

Die Fig. 14 bis 16 zeigen den Lastenroller 1a mit den Lenksäulen 21b und 21bb. Wie aus der Fig. 17 zu erkennen ist, besitzt der Lastenroller 1a einen festen Lenker 20a, der in der Mitte einen nach vorn gerichteten Handbogen 29 aufweist

Wenn der Lastenroller 1a durch Hochklappen bzw. Entfernen des Trittbretts 7a in einen Einkaufsroller umgewandelt wird, kann dieser über den Handbogen 29 bequem mit der Hand erfasst und gezogen werden, ohne dass die Lenksäule 21b und 21bb verstellt werden muss. Zur Versteifung des Handbogengriffs 29 kann eine Querstange 30 eingebaut werden, welche die beiden Lenksäulen 21b und 21bb oben verbindet. Um den Lastenroller 1a für einen Transport, beispielsweise im Kofferraum eines Autos, anzupassen, kann der Lenker 20a in der Höhe ver- und festgestellt werden.

Damit das hochgeklappte Trittbrett 7a in seiner Lage sicher festgehalten wird, ist eine Gasdruckfeder 40 (Fig. 16) vorgesehen, wobei das Trittbrett 7a seitlich durch die Anschläge 41a und 41aa des Vorderteils 6a formschlüssig gesichert ist.

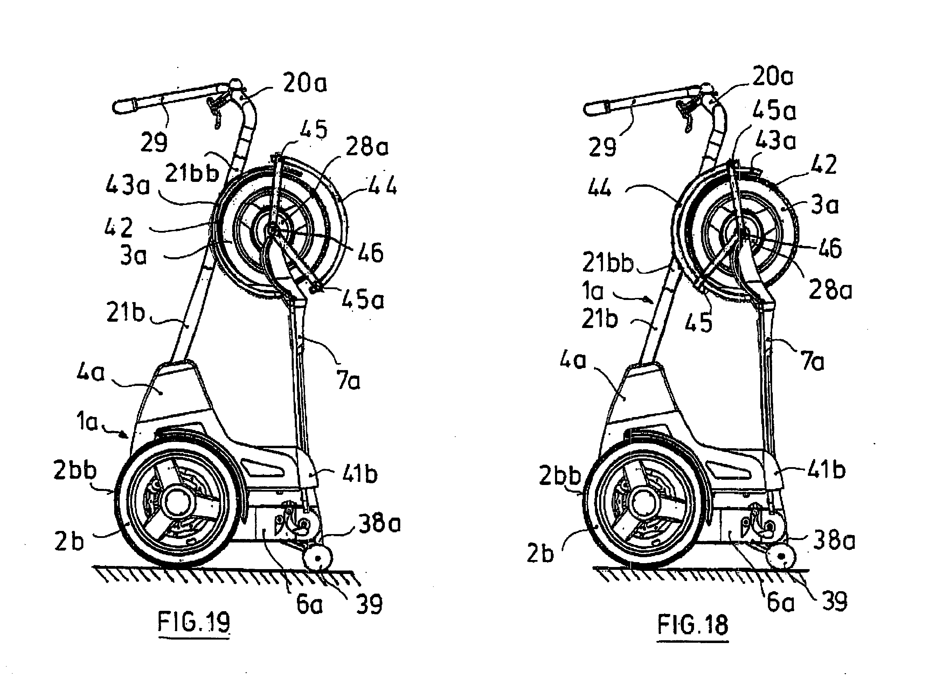

Das Trittbrett 7a besitzt -wie aus den Fig. 18 und 19 ersichtlich- an der Klappstelle 38 eines kleines Stützrad oder ein Paar Stützräder 39a. Diese ermöglichen ein Ziehen des Lastenrollers 1a mit hochgeklapptem Trittbrett 7a, ohne das der Lastenroller 1a in eine schräge Lage gekippt werden muss. Der Einkaufsroller steht in diesem Fall auf drei bzw. vier Rädern und kann gerollt werden. Um das unbeabsichtigte Rollen des Lastenrollers 1a, z.B. auf einer abschüssigen Fläche zu vermeiden, können die für die Fronträder 2b und 2bb vorgesehenen Bremser 24b und 24bb betätigt bzw. festgestellt werden.

Das Hinterrad 3a besitzt neben dem vorhandenen festen Schutzblech 43 ein Zusatzschutzblech 44, das über dem Schutzblech 43 liegt und mittels Gestänge 45 und 45a in dieser Lage gehalten wird (siehe Fig. 18). Das Gestänge 45 und 45a ist an Hinterradachse 46 drehbar gelagert, so dass das Zusatzschutzblech 43 über den im hochgeklappten Zustand des Lastenrollers 1a frei stehenden und ggf. verschmutzten Reifen 43 des Hinterrads 3a i schwenkbar ist, wodurch der Reifen 43 abgedeckt und nicht mehr sichtbar ist (siehe Fig. 19).

Es wird noch einmal auf die Fig. 16 Bezug genommen. Oben auf der Ladeplattform 4a befindet sich ein Kasten 31a für die Akkus 27a, die den am Hinterrad 3a eingebauten Radnabenmotor 28a mit Strom versorgen. Die Akkus 27a sind durch einen Deckel 47 abgedeckt, über dem sich die Ladefläche 48 für die Ablage der Einkaufswaren. Der Deckel 47 und die Akkus 27a sind so gestaltet, dass der Deckel 47 einfach zu öffnen ist und die Akkus 27a bequem ein- und ausgebaut werden können.

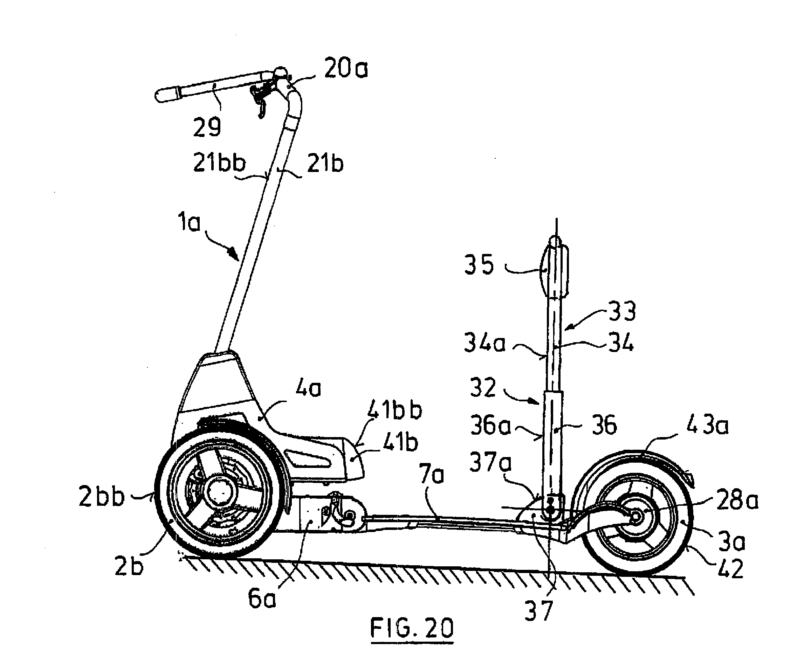

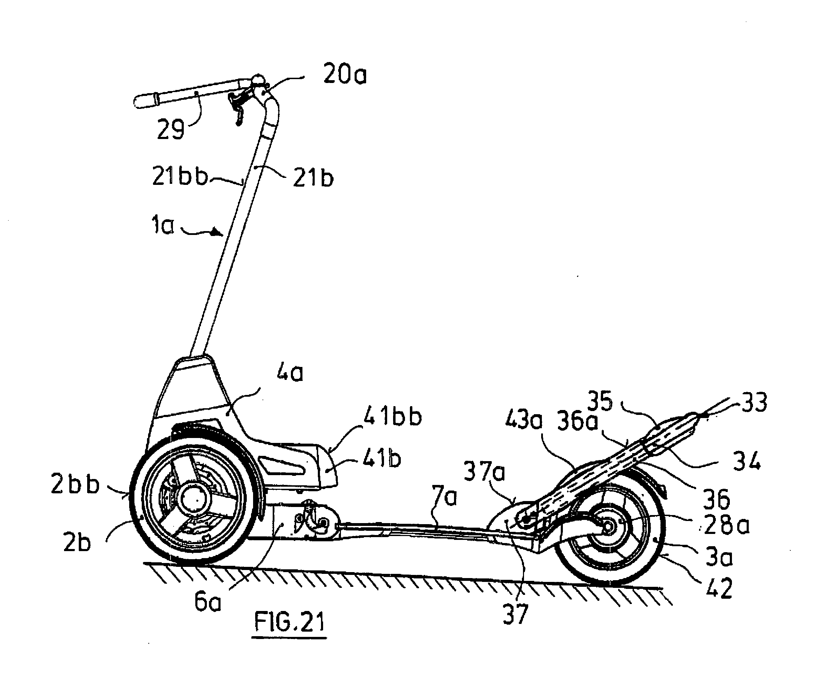

Bei langem Fahrweg ist es zweckmäßig, eine klapp- und in der Höhe verstellbare Abstütze 32 für den Fahrer vorzusehen. Die Fig. 20 zeigt die Abstütze 32 im aufgeklappten Zustand und die Fig. 21 im zusammengeklappten Zustand.

Die Abstütze 32 besteht aus einem zwei Schenkeln 34 und 34a eines in der Mitte eine Lehne 35 aufweisenden U-förmigen Bogens 33 und zwei Rohrstangen 36 und 36a, in denen die Schenkel 34 und 34a spielfrei eingeschoben und in der Höhe verstell- und feststellbar sind. Die Rohrstangen 36 und 36a sind in Lagerböcken 37 und 37a drehbar gelagert sind, welche auf dem Trittbrett 7a fest montiert sind, wobei die Rohrstangen 36 und 36a in der senkrechten Position (siehe Fig. 20) und in der aufgeklappten Position (Fig. 21) durch ein z.B. Feder-Bolzen-System arretierbar sind. Als Alternative zu der Lehne 35 kann auch ein Sattel für den Sitz eingebaut werden.

Bei elektrischem Antrieb durch den Radnabenmotor 28a kommt das Pedelecs-Prinzip zur Regelung der Motorleistung zum Einsatz. Hierbei wird der elektrische Antrieb so ausgebildet, dass dieser nur dann aktiviert wird, wenn der Fahrer selbst tritt. Mit anderen Worten, der Radnabenmotor 28a arbeitet nur dann, wenn der Lastenroller 1a mit Absicht beschleunigt wird. Auch während der Fahrt muss der Fahrer ab und zu treten, sonst wird der elektrische Antrieb gedrosselt, was letztendlich zum Stoppen des Lastenrollers führt, wobei ein beabsichtigtes Gasgeben am Gashebel 26a beim still stehenden Lastenroller nicht zum Aktivieren des Radnabenmotors 28a führt. Diese Maßnahmen dienen dazu, Unfälle bei der Benutzung des Lastenrollers 1a durch eine falsche Dosierung der Antriebsleistung oder eine falsche Bedienung zu vermeiden.

Hierzu ist ein Beschleunigungssensor vorgesehen, der eine Beschleunigung des Lastenrollers erfasst und veranlasst, dass der Radnabenmotor 28a aktiviert wird. Wenn keine Beschleunigung detektiert wird, schaltet der Radnabenmotor 28a ab.

Als Alternativen zum Antrieb durch das Hinterrad 3a können alle Räder des Lastenrollers mit Radnabenmotoren 28a ausgerüstet werden, sodass der Lastenroller 1a einen Allradantrieb für schlechte Straßenverhältnisse besitzt. Durch den Allradantrieb können die beiden Fronträder 2b und 2bb durch eine Elektronik über die Lenkung derart geregelt werden, dass das innen liegende Frontrad angepasst langsamer dreht als das außen liegende Frontrad, wenn der Lastenroller 1a in die Kurve fährt.

Die beiden Fronträder 2b und 2bb können aber auch nur mit einem Motor angetrieben werden, der über ein Differenzialgetriebe mit den Rädern verbunden ist.

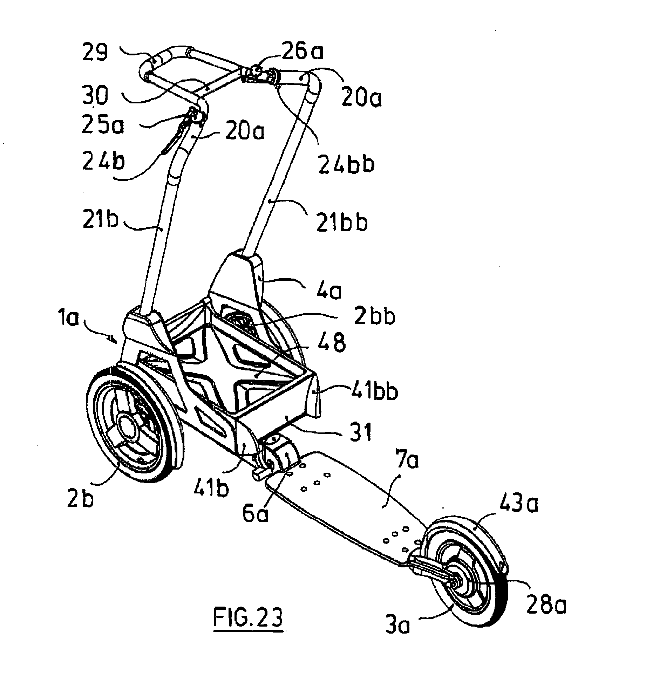

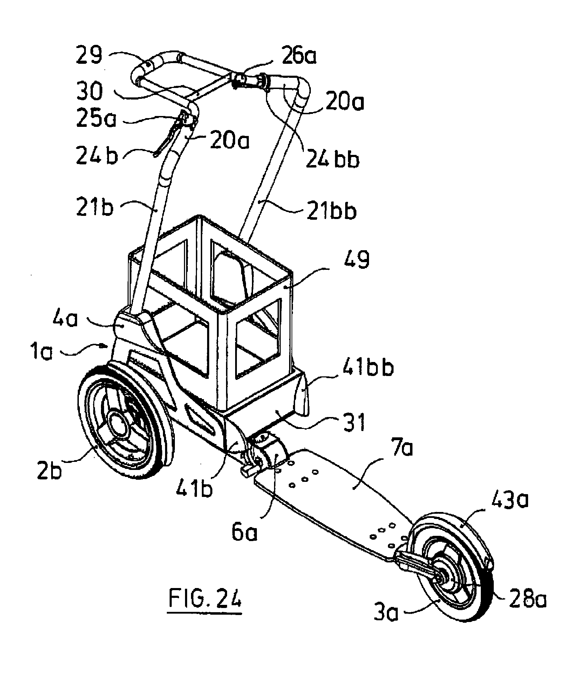

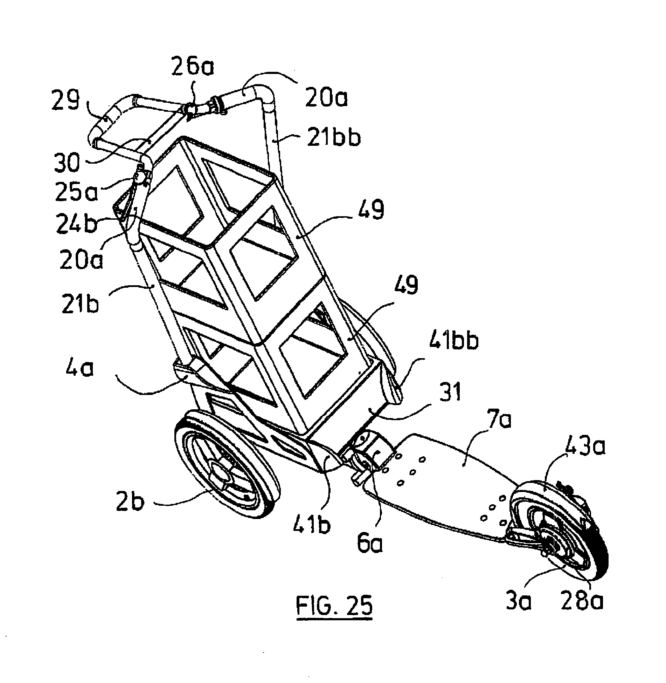

Die Ladefläche 48 des Lastenrollers 1a ist derart bemessen, dass ein großer schwerer Getränkekasten 49 aufgenommen und bequem ein- und ausgeladen werden kann. Die Fig. 23 zeigt den Lastenroller 1a im unbeladenen Zustand, die Fig. 24 und 25 im beladenen Zustand. Es können -wie die Fig. 25 verdeutlicht- auch zwei schwere Getränkekästen 49 übereinandergestapelt mit dem Lastenroller 1a transportiert werden.

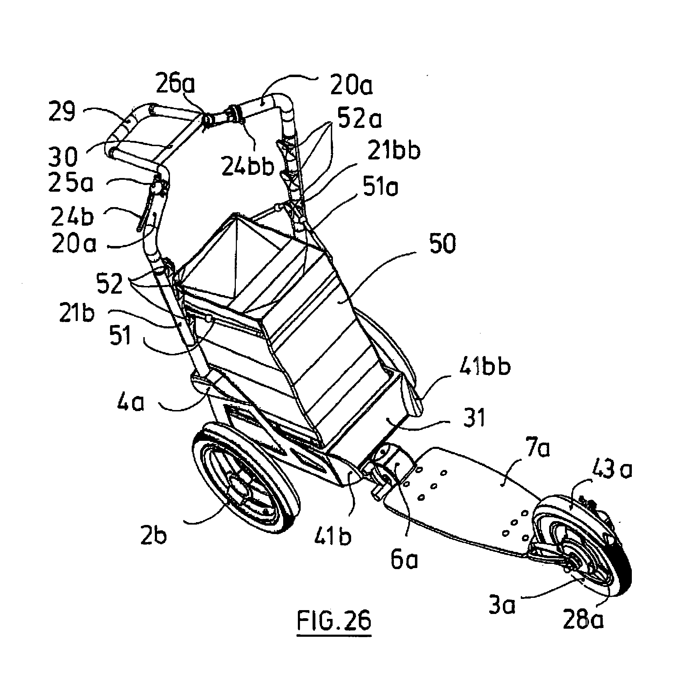

Für kleine Waren ist -wie Fig. 26 zeigt- ein Einkaufssack 50 angebracht, welcher durch eingebaute Federdrähte selbst faltbar ist und zwei Henkel 51 und 51a aufweist. Abhängig von der Warenmenge können die Henkel 51 und 51a an den an den Lenksäulen 21b und 21bb befindlichen Haken 52 und 52a eingehängt werden, sodass die Waren sicher verstaut transportiert werden können.

Der Einkaufssack 50 kann aber auch anstelle der Haken 52 und 52a stufenlos mittels einstellbarer Schieber an den Lenksäulen eingehängt werden.

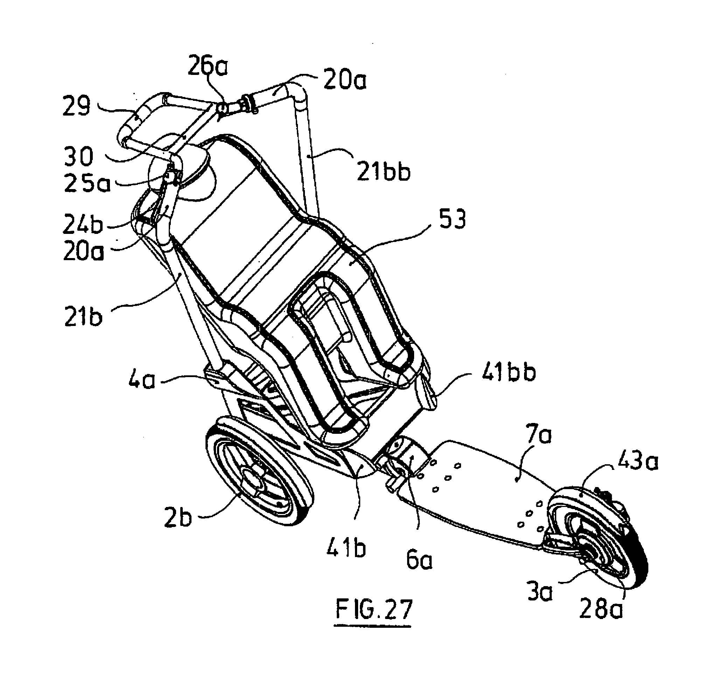

Die Fig. 27 zeigt einen auf der Ladefläche 48 eingebauten Babykorb 53 oder einen Sitz für ein Kleinkind als Alternative zum Einkaufssack 50, so dass der Lastenroller 1a auch zum Transport eines Babys oder Kleinkindes z.B. beim Spaziergang genutzt werden kann.

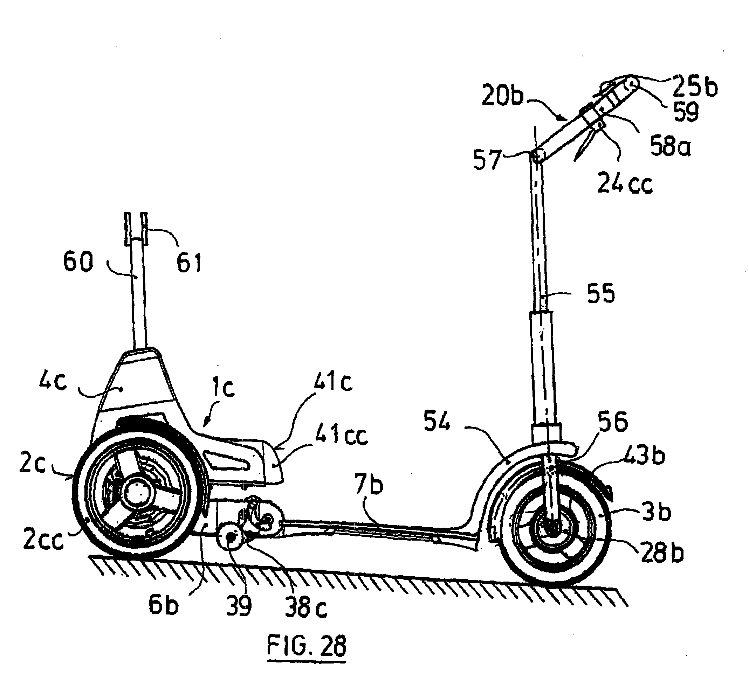

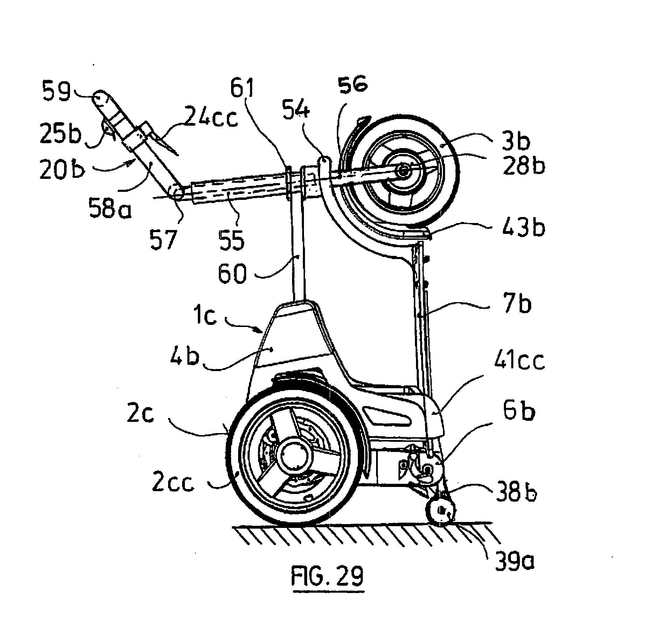

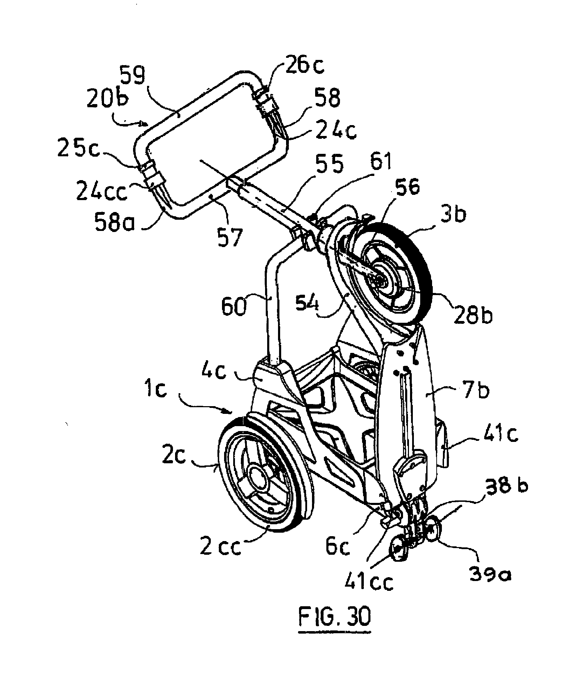

Die Fig. 28 bis 30 zeigen eine nicht zur Erfindung gehörende Lösung, bei der das Hinterrad 3b am Trittbrett 7b in einem Vorleger 54 gelenkig gelagert und mit einem Lenker 20b zum Lenken des Hinterrads versehen ist. In diesem Fall fährt der Lastenroller 1b mit dem Hinterrad 3b vorwärts, wobei der Lenker 20b durch das Lenkrohr 55 in der Höhe verstellt und fest arretiert werden kann. Das Hinterrad 3b ist in einer Gabel 56 drehbar montiert. Der Lenker 20b ist als ein geschlossener Rohrrahmen gestaltet, dessen Unterstange 57 mit dem Lenkrohr 55 verbunden ist. Die Seitenstangen 58 und 58a weisen zwei Handbremsen 24c und 24cc, eine Klingel 25a sowie den Gashebel 26a auf, wobei über die Seitenstangen 58 und 58a das Hinterrad 3b gelenkt wird. Die Oberstange 59 des Lenkers 20b dient dazu, dass der Lastenroller 1c mit Hand gezogen werden kann, wenn das Trittbrett 7c hochgeklappt ist (siehe Fig. 28).

Um den Lenker 20b abzustützen, weist die Ladeplattform 4c einen Stützbogen 60 mit einer angeschweißten Aufnahme 61 in der Mitte auf. Das Lenkrohr 55 liegt formschlüssig in der Aufnahme 61, wodurch der Lenker 20b beim Ziehen des so gestalteten Lastenrollers 1c durch die Oberstange 59 sicher abgestützt wird, wobei an der Klappstelle 38b des Trittbretts 7c ein Paar Stützräder 39a vorgesehen sind.

Die Vorteile der Erfindung bestehen darin, dass
- die Lenksäule bzw. der Lenker zwei Positionen einnehmen kann, und zwar einen Fahrzustand als Lastenroller und einen Ziehzustand als Einkaufsroller,
- der Neigungsmechanismus der Fronträder einfach gestaltet ist,
- durch ein Stützrad bzw. ein Paar Stützräder an der Klappstelle des Trittbretts der Lastenroller auf allen Rädern stehen kann, auch nachdem das Trittbrett hochgeklappt ist, und der Lastenroller ohne Kippung leichter gezogen werden kann,
- der Antrieb des Lastenrollers je nach den Straßenverhältnissen als Allradantrieb, Frontantrieb oder Hinterradantrieb auslegbar ist,
- der Lastenroller eine Abstütze für den Fahrer aufweist,
- der Lastenroller für den Transport sowohl von schweren Einkaufsgütern wie Getränkekästen als auch für Personen, Babys, Kleinkinder gleichermaßen einsetzbar ist.

**Bezugszeichenliste**

| | |
|---|---|
| Lasten- und/oder Transportroller | 1, 1a, 1b |
| Fronträder | 2a, 2aa, 2b, 2bb, 2c, 2cc |
| Hinterrad | 3, 3a, 3b |
| Ladeplattform | 4, 4a, 4b |
| Lenkplatte | 5 |
| Vorderteil des Trittbretts | 6, 6a, 6b |
| Trittbrett | 7, 7a, 7b |
| Achsbolzen | 8 |
| Kreissegmentförmige Nut der Lenkplatte | 9 |
| Bohrung der Lenkplatte | 10 |
| Runder Zapfen des Vorderteils | |
| Des Trittbretts | 11 |
| Langloch der Lenkplatte | 12 |
| Führungszapfen der Ladeplattform | 13 |
| Kugelkopf der Lenkplatte | 14, 14a |
| Achsschenkel | 15, 15a |
| Drehzapfen | 16, 16a |
| Schwinge | 17, 17a |
| Kugelkopf der Schwinge | 18, 18a |
| Lenkhebel | 19, 19a |
| Lenker | 20, 20a, 20b |
| Lenksäule | 21a, 21aa, 21b, 21bb |
| Achse | 22 |
| Schieber | 23 |
| Handbremser | 24a, 24aa, 24b, 24bb, 24c, 24cc |
| Klingel | 25, 25a, 25b |
| Gashebel | 26, 26a, 26b |
| Akkus | 27, 27a |
| Elektrischer Radnabenmotor | 28, 28a, 28b |
| Handbogengriff | 29 |
| Querstange | 30 |
| Kasten für Akkus | 31, 31a |
| Abstütze | 32 |
| U-förmiger Bogen | 33 |
| Schenkel des U-förmigen Bogens | 34, 34a |
| Lehne | 35 |
| Rohrstange | 36, 36a |
| Lagerbock | 37, 37a |
| Klappstelle | 38, 38a, 38b |
| Stützrad bzw. -räder | 39, 39a |
| Gasdruckfeder | 40 |
| Seitlicher Anschlag für | 41a, 41aa, 41b, 41bb, |
| hochgeklapptes Trittbrett | 41c, 41cc |
| Reifen des Hinterrades | 42 |
| Festes Schutzblech des Hinterrads | 43, 43a |
| Zusatzschutzblech | 44 |
| Gestänge des Zusatzschutzblechs | 45, 45a |
| Hinterradachse | 46 |
| Deckel für Akkus | 47 |
| Ladefläche | 48 |
| Getränkekasten | 49 |
| Selbst faltbarer Einkaufssack | 50 |
| Henkel des Einkaufssackes | 51, 51a |
| Haken | 52, 52a |
| Babykorb | 53 |
| Vorleger | 54 |
| Lenkrohr | 55 |
| Gabel | 56 |
| Unterstange | 57 |
| Seitenstange | 58, 58a |
| Oberstange | 59 |
| Stützbogen | 60 |
| Angeschweißte Aufnahme | 61 |

## Patentansprüche

1. Lasten- und/oder Transportroller in Form eines Tretrollers, welcher mindestens drei Räder (2a, 2aa; 2b, 2bb; 3, 3a), einen Lenker (20;20a), eine Ladeplattform (4; 4a) und ein hochklapp- und arretierbares Trittbrett (7;7a) aufweist, wobei die beiden Fronträder (2a,2aa;2b,2bb) mit einem Neigungsmechanismus bei Kurvenfahrt zur Aufnahme der Fliehkraft ausgestattet sind, und wobei der Lenker (20,20a) über zwei Lenksäulen (21a, 21aa; 21b, 21bb) mit der Ladeplattform (4; 4a) fest verbunden ist, **dadurch gekennzeichnet, dass** der
- Lasten- und/oder Transportroller (1; 1a)) unter der Ladeplattform (4;4a) eine dreiecksförmiger Lenkplatte (5) und darunter ein Vorderteil (6;6a) des Trittbretts (7;7a) aufweist,
- wobei die Lenkplatte (5)
- eine Bohrung (10), in der ein runder Zapfen (11) des Vorderteils (6) des Trittbretts (7) liegt,
- eine ringsegmentförmige Nut (9), in welcher ein Achsbolzen (8) des Vorteils (6) des Trittbretts (7;7a) liegt, wobei der Achsbolzen (8) den Vorderteil (6;6a) des Trittbretts (7;7a) drehbar um eine Lenkachse (X-X) mit der Ladeplattform (4;4a) verbindet,
- ein Langloch (12), in welchem ein runder Führungszapfen (13) der Ladeplattform (4;4a) liegt, und
- zwei gegenüberliegende Kugelköpfe (14,14a) aufweist,
- wobei die Kugelköpfe (14, 14a) jeweils in einem Lager an einem Ende des Lenkhebels (19, 19a) gelenkig liegen, wobei diese jeweils an ihren anderen Enden ein Lager für einen weiteren Kugelkopf (18; 18a) einer dreiecksförmigen Schwinge (17,17a) aufweisen, auf deren Achsschenkeln (15, 15a) die Fronträder (2a, 2aa) drehbar gelagert sind,
- wobei die Schwingen (17, 17a) jeweils über Drehzapfen (16, 16a) an der Ladeplattform (4;4a) drehbar gelagert sind,
- so dass, wenn die Ladeplattform (4;4a) über den Lenker (20;20a) nach links bzw. rechts um die Lenkachse (X-X) gelenkt wird, die Lenkplatte (5) mit dem Kugelkopf (14, 14a) auf die Lenkhebel (19, 19a) drückt,
- so dass der weitere Kugelkopf (18,18a) nach oben oder nach unten gedrückt wird,
- so dass die Schwingen (17, 17a) um die Drehzapfen (16, 16a) nach oben oder unten gedrückt werden und damit die Fronträder (2a,2aa;2b,2bb) um den gleichen Betrag aber entgegen gesetzter Richtung nach oben oder unten gedrückt werden,
- so dass die beiden Fronträder (2a, 2aa;2b,2bb) bei der Lenkung gegenüber der Fahrbahn nach links oder rechts geneigt werden,
- wobei die Lenkachse (X-X) vor einer gedachten Achse (Y-Y) der beiden Fronträder liegt und um den Lenkungswinkel von 45° nach links oder rechts ausgelenkt werden kann.

2. Lasten- und/oder Transportroller nach Anspruch 1, **dadurch gekennzeichnet, dass** das Trittbrett (7;7a) bei der Fahrt durch einen Schieber (23) starr mit seinem Vorderteil (6;6a) verbunden werden kann und dieses um die Achse (22) seines Vorderteils (6;6a) um eine Klappstelle (38;38a) hochklappbar ist, wobei das so hochgeklappte Trittbrett (7;7a) durch eine eingebaute Gasdruckfeder (40) und seitlich formschlüssig durch Anschläge (41a, 41aa; 41b,41bb) in seiner Lage fest arretiert wird, wobei in diesem Zustand der Lenker (20;20a) über die Lenksäule (21a, 21aa;21b,21bb) nach vorn verstellt wird, wobei der fest eingebaute Lenker (20; 20a) einen Handbogengriff (29) zum Greifen und eine Querstange (30) zur Versteifung der Lenksäulen (21a,21aa;21b, 21bb) aufweist, welche durch die Querstenge (30) oberen miteinander verbunden sind, wobei der Lenker (20;20a) in der Höhe stufenlos ver- und festgestellt werden kann, und dass das Trittbrett (7;7a) im Bedarfsfall ausgebaut und entfernt werden kann.

3. Lasten- und/oder Transportroller nach den Ansprüchen 1 oder 2, **dadurch gekennzeichnet, dass** an der Klappstelle (38;38a) des Trittbretts (7;7a) mindestens ein Stützrad oder ein Paar Stützräder (39;39a) aufweist, so dass beim hochgeklappten Trittbrett (7;7a) der Lastenroller noch auf drei oder vier Rädern stehen kann.

4. Lasten- und/oder Transportroller nach den Ansprüchen 1 oder 2, **dadurch gekennzeichnet, dass** das Hinterrad (3;3a) als Antriebsrad einen elektrischen Radnabenmotor (28; 28a) aufweist, wobei der Lenker (20;20a) außer zwei Bremsen (24a, 24aa; 24b, 24bb) mit einer Klingel (25; 25a) noch einen Gashebel (26;26a 26b) zum Regulieren der Leistung des elektrischen Radnabenmotors aufweist, wobei das Regulieren durch einen Beschleunigungssensor funktioniert, der die Beschleunigung des Lastenrollers nur durch den Fußstoß des Fahrers misst und den Radnabenmotor einschaltet.

5. Lasten- und/oder Transportroller nach den Ansprüchen 1 oder 2, **dadurch gekennzeichnet, dass** das Hinterrad (3;3a) ein fest eingebautes Schutzblech (43;43a) und ein Zusatzschutzblech (44) aufweist, welches über dem Schutzblech (43;43a) eingebaut und über Gestänge (45) um die Hinterradachse (46) drehbar gelagert ist, so dass die Reifen (42) des Hinterrads (3;3a) bei hochgeklapptem Trittbrett (7;7a) durch Verschwenken des Zusatzschutzbleches (44) verdeckt ist.

6. Lasten- und/oder Transportroller nach einem der vorhergehenden Ansprüche, **dadurch gekennzeichnet, dass** der Lastenroller eine klapp- und in der Höhe verstellbare Abstütze (32) für den Sitz des Fahrers aufweist, wobei diese Abstütze (32) aus einem zwei Schenkeln (34, 34a), in der Mitte eine Lehne (35) aufweisenden U-förmigen Bogen (33) und zwei Rohrstangen (36, 36a) besteht, in denen die Schenkel (34, 34a) eingeschoben und in der Höhe verstell- und feststellbar sind, wobei die Rohrstangen (36, 36a) in Lagerböcken (37, 37a) drehbar gelagert sind, welche auf dem Trittbrett (7;7a) fest montiert sind, wobei die Rohrstangen (36, 36a) in der senkrechten Position und in der geklappten Position feststellt sind, und dass anstelle der Lehne (35) ein Sattel für den Sitz eingebaut werden kann.

7. Lasten- und/oder Transportroller nach Anspruch 4, **dadurch gekennzeichnet, dass** alle Räder (2a, 2aa; 2b, 2bb; 3, 3a) des Lasten- und/oder Transportrollers elektrische Radnabenmotoren (28; 28a) aufweisen.

8. Lasten- und/oder Transportroller nach Anspruch 7, **dadurch gekennzeichnet, dass** nur die beiden Fronträder (2a, 2aa; 2b, 2bb) mit elektrischen Radnabenmotoren (28; 28a) ausgestattet sind, so dass der so gestaltete Lasten- und/oder Transportroller mit Frontantrieb versehen werden kann, wobei mittels Elektronik in Abhängigkeit der Lenkung in der Kurve das innen liegende Rad (2a,2aa; 2b, 2bb) langsamer als das außen liegende Rad (2aa, 2a;2bb, 2b) dreht.

9. Lasten- und/oder Transportroller nach Anspruch 4, **dadurch gekennzeichnet, dass** die beiden Fronträder (2a, 2aa; 2b, 2bb)) nur mit einem Motor angetrieben sind, der über ein Differenzialgetriebe mit den Rädern verbunden ist.

10. Lasten- und/oder Transportroller nach Anspruch 1, **dadurch gekennzeichnet, dass** der Ladeplattform (4;4a) eine auf einem Deckel (47) eines oder mehrerer Akkus (27;27a) befindliche Ladefläche (48) zugeordnet ist.

11. Lasten- und/oder Transportroller nach Anspruch 10, **dadurch gekenzeichnet,** dass die Ladefläche (48) derart bemessen ist, dass ein Getränkekasten (49) oder zwei Getränkekästen (49) übereinander stapelbar auf der Landfläche (48) Platz finden.

12. Lasten- und/oder Transportroller nach Anspruch 10, **dadurch gekennzeichnet, dass** auf der Ladefläche (48) ein Einkaufssack (50) angebracht werden kann, welcher durch Federdraht selbst faltbar ist und zwei Henkel (51, 51a) aufweist, die stufenweise abhängig von der Warenmenge in die an den Lenksäulen (21a, 21aa; 21b, 21bb) befindlichen und gegenüber liegenden Haken (52, 52a) einhängbar sind, wobei der Einkaufssack (50) über ver- und feststellbare Schieber an den Lenksäulen (21a, 21aa; 21b, 21bb) stufenlos eingehängt werden können.

13. Lasten- und/oder Transportroller nach Anspruch 10, **dadurch gekennzeichnet, dass** auf der Ladefläche (48) ein Babykorb (53) oder ein Sitz für ein Kleinkind eingebaut werden kann.

## Claims

1. Load and/or transport cart in the form of a scooter, which has at least three wheels (2a, 2aa; 2b, 2bb; 3,3a), a handlebar (20;20a), a loading platform (4;4a) and a footboard (7;7a), which can be folded upward from a use position parallel to a roadway and locked in upward folded position, wherein the two front wheels (2a,2aa;2b,2bb) are equipped with an inclination mechanism for absorbing centrifugal force during cornering, and wherein the handlebar (20,20a) is fixedly connected to the loading platform (4;4a) via two steering columns (21a,21aa;21b,21bb), **characterized in that**
- the load and/or transport cart (1;1a) comprises, under the loading platform (4;4a), a triangular steering plate (5) and, below the steering plate, a front part (6;6a) of the foot board ((7;7a),
- wherein the steering plate (5) comprises
- a bore (10), in which a round pin (11) of the front part (6) of the footboard (7) lies,
- an annular-segment shaped groove (9) in which a steeringpivot pin (8) of the part (6) of the footboard (7;7a) lies, wherein the steering pin (8) connects the front part (6;6a) of the footboard (7;7a) to the loading platform (4;4a) in a manner so that the footboard (7;7a) is rotatable about a steering axis (X-X) of the cart,
- an elongated hole (12) in which a round guide pin (13) of the loading platform (4;4a) lies, and
- two opposing ball heads (14;14a),
- wherein each of the ball heads (14, 14a) lies in an articulated manner in a bearing at one end of the steering lever (19,19a), wherein said ball heads have at the a other ends thereof, a bearing for a further ball head (18;18a) of a triangular swinging fork (17,17a), on the stub axles (15,15a) of which the front wheels (2a,2aa) are rotatably mounted,
- wherein each of the swinging forks (17,17a) is rotatably mounted on the loading platform (4;4a) via pivot pins (16,16a),
- whereby and so, when the loading platform (4;4a) is deflected to the left and right about the steering axis (X-X) via the handlebar (20;20a), the steering plate (5) presses via the ball head (14,14a) onto the steering lever (19,19a),
- and so the further ball head (18, 18a) is pressed upward or downward,
- and so the swinging forks (17,17a) are pressed upward or downward about the pivot pins (16,16a) and, therefore, the front wheels (2a,2aa;2b,2bb) are pressed upward or downward by the same amount but in the opposite direction,
- and so the two front wheels (2a,2aa;2b,2bb) are slanted to the left or right relative to the roadway during steering,
- wherein the steering axis (X-X) is located in front of an imaginary axis (Y-Y) of the two front wheels and can be deflected to the left or right by the steering angle of 45°.

2. Load and/or transport cart according to claim 1, **characterized in that** the footboard (7;7a) is rigidly connected to the front part (6;6a) thereof via a sliding element (23) and said footboard can be folded upward the least one axis member (32) of the front part (6;6a) thereof, about a folding point (38;38a), wherein the footboard (7;7a) which has been folded upward in this manner, is securely locked in the position thereof by way of an installed gas pressure spring (40) and laterally in a form locked manner by way of stops (41a,41aa;41b, 41bb), wherein, in this state, the handlebar (20a;20a) is shifted forward via the steering column (21a,2aa;21b,21bb), wherein the fixedly installed handlebar (20;20a) comprises a hand-curved grip (29) for gripping, and a crossbar (30) for stiffening the steering columns (21a,21aa;21b,21bb), which are connected to one another at the top via the crossbar (30), wherein the handlebar (20;20a) is stepless height-adjustable and lockable, and wherein the footboard (7;7a) can be uninstalled and removed if necessary.

3. Load and/or transport cart, according to claims 1 or 2, **characterized in that** at least one support wheel or a pair of support wheels (39;39a) are mounted on the folding point (38;38a), thereby ensuring that the cart can still stand on three or four wheels with the footboard (7;7a) folded up.

4. Load and/or transport cart according to claim 1 or 2, **characterized in that** the rear wheel (3;3a) is a drive wheel, comprising an electric wheel hub motor (28;28a), wherein the handlebar (20;20a) is provided with two brakes (24a,2aa;24b,24bb) ands a bell (25;25a) and a throttle lever (26;26a;26b) for regulating output of the electric wheel hub motor, wherein the regulation functions by the way of an acceleration sensor which measures the acceleration of the load cart only via foot thrust of a driver of the cart and switches on the wheel hub motor.

5. Load and/or transport cart according to claims 1 or 2, **characterized in that** the rear wheel (3;3a) comprises a fixedly installed guard plate (43;43a) and an additional guard plate (44), which is installed over the guard plate (43;43a) and is supported via a rod assembly (45) such that it is rotatable about the rear wheel axle (46), and so the tire (42) of the rear wheel (3;3a) is covered by swiveling the additional guard plate (44) when the footboard (7;7a) is folded upward.

6. Load and/or transport cart according 1 or 2, **characterized in that** the load cart comprises a foldable and height-adjustable support (32) for the seat of the driver, wherein this support (32) is formed of a u-shaped arch (33) having two legs (34,34a) and a backrest (35) in the center, and two tubular bars (36,36a) into which the legs (34,34a) are slid and are height-adjustable and lockable, wherein the tubular bars (36,36a) are rotatable supported in bearing blocks (37,37a9, which are fixedly mounted on the footboard (7;7a), wherein the tubular bars (36,36a) are fixed in the vertical position and in the folded position, and wherein a saddle instead of the backrest (35) can be installed for the seat.

7. Load and/or transport cart according to claim 4,**characterized in that** all wheels (2a,2aa;2b,2bb;3;3a) of the load and/or transport cart comprise electrical hub motors (28;28a).

8. Load and/or transport cart according to claim 7, **characterized in that** only the two front wheels (2a,2aa;2b,2bb) are equipped with electric hub motors (28;28a), whereby the thusly designed load and/or transport cart can be equipped with front drive, wherein, by way electronics, the inner wheel (2a,2aa; 2b,2bb) rotates more slowly than the outer wheel (2aa,2a;2bb,2b) in the curve in accordance with the steering.

9. Load and/or transport cart according to claim 4, **characterized in that** the two front wheels (2a,2aa;2b,2bb) are driven by only one motor, which is connected to the front wheels via a differential gearbox.

10. Load and/or transport cart according to claim 1, **characterized in that** a loading surface (48) located on a cover (47) of one or more rechargeable batteries (27;27a) is assigned to the loading platform (4;4a).

11. Load and/or transport cart according to claim 10, **characterized in that** the loading surface (48) is sized such that one beverage crate (49) or two beveraqe crates (49), stacked one on to top of the other, have space on the loading surface (48).

12. Load and/or transport cart according to claim 10, **characterized in that** a shopping bag (50) can be sized to be placed on the loading surface (48) and is self-foldable via spring wire and has two handles (61,51a), which can be hung steplessly depending on the quantity of goods in the opposing hooks (52,52a) located on the steering columns (21a,21aa;21b,21bb), wherein the shopping bag (50) can be stepless hung on the steering columns (21a,21aa;21b,21bb) via adjustable and lockable sliding elements.

13. Load and/or transport cart according to claim 10, **characterized in that** a basket (53) or seat for a small child can be installed on the loading surface (48).

## Revendications

1. Chariot pour charges et/ou transport sous la forme d'une trottinette, qui présente au moins trois roues (2a ; 2aa ; 2b, 2bb ; 3, 3a), un guidon (20 ; 20a), une plateforme de chargement (4 ; 4a) et un marchepied (7 ; 7a) relevable et blocable, les deux roues avant (2a, 2aa ; 2b, 2bb) étant équipées d'un mécanisme d'inclinaison pour une prise en compte de la force centrifuge lors d'un trajet en courbe, et le guidon (20, 20a) étant relié fixe à la plateforme de chargement (4 ; 4a) par l'intermédiaire de deux arbres de direction (21 a, 21aa ; 21 b, 21 bb), **caractérisé en ce que** le
- chariot pour charges et/ou transport (1 ; 1a) présente sous la plateforme de chargement (4 ; 4a) une plaque de direction (5) triangulaire et en dessous une partie avant (6 ; 6a) du marchepied (7 ; 7a),
- la plaque de direction (5) présentant
- un alésage (10), dans lequel se trouve une cheville ronde (11) de la pièce avant (6) du marchepied (7),
- une rainure (9) en forme de segment annulaire, dans laquelle est agencée un boulon formant axe (8) de la pièce avant (6) du marchepied (7 ; 7a), le boulon formant axe (8) reliant la partie avant (6 ; 6a) du marchepied (7 ; 7a) à la plateforme de chargement (4 ; 4a) de manière pivotante autour d'un axe de direction (X-X),
- un trou allongé (12), dans lequel se trouve une cheville de guidage (13) ronde de la plateforme de chargement (4 ; 4a), et
- deux têtes sphériques (14, 14a) opposées,
- les têtes sphériques (14, 14a) étant agencées articulées respectivement dans un palier au niveau d'une extrémité d'une fusée de direction (19, 19a), lesdites fusées de direction présentant respectivement au niveau de leur autre extrémité un palier pour une autre tête sphérique (18; 18a) d'une bielle oscillante (17, 17a) triangulaire, sur les fusées d'axe (15, 15a) desquelles les roues avant (2a, 2aa) sont montées pivotantes,
- les bielles oscillantes (17, 17a) étant montées pivotantes au niveau de la plateforme de chargement (4 ; 4a) respectivement par l'intermédiaire de tourillons (16, 16a),
- de sorte que, lorsque la plateforme de chargement (4 ; 4a) est dirigée par l'intermédiaire du guidon (20 ; 20a) vers la gauche ou vers la droite autour de l'axe de direction (X-X), la plaque de direction (5) pousse sur la fusée de direction (19, 19a) avec la tête sphérique (14, 14a),
- de sorte que l'autre tête sphérique (18, 18a) est poussée vers le haut ou vers le bas,
- de sorte que les bielles oscillantes (17, 17a) sont poussées vers le haut ou vers le bas autour des tourillons (16, 16a) et qu'ainsi les roues avant (2a, 2aa ; 2b, 2bb) sont poussées vers le haut ou vers le bas dans une même mesure mais dans une direction opposée,
- de sorte que les deux roues avant (2a, 2aa ; 2b, 2bb) sont inclinées vers la gauche ou vers la droite par rapport à la chaussée lors de la conduite,
- l'axe de direction (X-X) se trouvant en avant d'un axe (Y-Y) imaginaire des deux roues avant et pouvant être dévié de 45° vers la gauche ou vers la droite autour de l'angle de direction.

2. Chariot pour charges et/ou transport selon la revendication 1, **caractérisé en ce que** le marchepied (7 ; 7a) peut être relié de manière rigide à sa partie avant (6 ; 6a) par l'intermédiaire d'une coulisse (23) lors du trajet et ledit marchepied peut être relevé au niveau d'un point de pliage (38 ; 38a) autour de l'axe (22) de sa partie avant (6 ; 6a), où le marchepied (7 ; 7a) ainsi relevé est bloqué fixe dans sa position grâce à un ressort à gaz (40) intégré et, latéralement, par complémentarité de forme grâce à des butées (41a, 41aa ; 41 b, 41 bb),
le guidon (20 ; 20a), dans cet état, étant orienté vers l'avant par l'intermédiaire de l'arbre de direction (21a, 21aa ; 21 b, 21 bb), le guidon (20 ; 20a) intégré fixe présentant une poignée courbe (29) destinée à une préhension et une barre transversale (30) destinée à une rigidification des arbres de direction (21a, 21aa ; 21 b, 21 bb), qui sont reliés l'un à l'autre vers le haut grâce à la barre transversale (30), le guidon (20 ; 20a) pouvant être orienté et verrouillé progressivement en hauteur, et le marchepied (7 ; 7a) peut être retiré et enlevé en cas de besoin.

3. Chariot pour charges et/ou transport selon la revendication 1 ou 2, **caractérisé en ce qu'**il présente au moins une roue de support ou une paire de roues de support (39 ; 39a) au niveau du point de pliage (38, 38a) du marchepied (7 ; 7a), de sorte que, lorsque le marchepied (7 ; 7a) est relevé, le chariot pour charges peut rester encore debout sur trois ou quatre roues.

4. Chariot pour charges et/ou transport selon la revendication 1 ou 2, **caractérisé en ce que** la roue arrière (3 ; 3a), en tant que roue d'entraînement, présente un moteur électrique (28 ; 28a) de moyeu de roue, le guidon (20 ; 20a) présentant, en plus de deux freins (24a, 24aa ; 24b, 24bb) et d'une sonnette (25 ; 25a), un levier de carburation (26 ; 26a, 26b) destiné à réguler la puissance du moteur électrique de moyeu de roue, la régulation fonctionnant grâce à un capteur d'accélération, qui mesure l'accélération du chariot pour charges uniquement grâce à l'impulsion de pied du conducteur et met en marche le moteur du moyeu de roue.

5. Chariot pour charges et/ou transport selon la revendication 1 ou 2, **caractérisé en ce que** la roue arrière (3 ; 3a) présente un garde-boue (43 ; 43a) intégré fixe et un garde-boue additionnel (44), qui est intégré par-dessus le garde-boue (43 ; 43a) et est logé rotatif autour de l'axe de roue arrière (46) par l'intermédiaire d'une tige (45), de sorte que le pneumatique (42) de la roue arrière (3 ; 3a) est masqué par basculement du garde-boue additionnel (44) lorsque le marchepied (7 ; 7a) est relevé.

6. Chariot pour charges et/ou transport selon l'une quelconque des revendications précédentes, **caractérisé en ce que** le chariot pour charges présente un appui (32) repliable et ajustable en hauteur pour le siège du conducteur, ledit appui (32) étant constitué d'un arc (33) en forme de U présentant deux coudes (34, 34a), avec au milieu un dossier (35), et de deux barres tubulaires (36, 36a), dans lesquelles les coudes (34, 34a) sont insérés et peuvent être orientés et verrouillés en hauteur, les barres tubulaires (36, 36a) étant logées rotatives dans des supports de palier (37, 37a), qui sont montés fixes sur le marchepied (7 ; 7a), les barres tubulaires (36, 36a) étant verrouillées dans la position verticale et dans la position repliée, et une selle pour le siège peut être intégrée à la place du dossier (35).

7. Chariot pour charges et/ou transport selon la revendication 4, **caractérisé en ce que** toutes les roues (2a, 2aa ; 2b, 2bb ; 3, 3a) du chariot pour charges et/ou transport présentent des moteurs électriques (28 ; 28a) de moyeu de roue.

8. Chariot pour charges et/ou transport selon la revendication 7, **caractérisé en ce que** seules les deux roues avant (2a, 2aa ; 2b, 2bb) sont équipées de moteurs électriques (28 ; 28a) de moyeu de roue, de sorte que le chariot pour charges et/ou transport ainsi configuré peut être muni d'un entraînement avant, la roue (2a, 2aa ; 2b, 2bb) se trouvant vers l'intérieur d'une courbe en fonction de la conduite tournant plus lentement que la roue (2aa, 2a ; 2bb, 2b) se trouvant à l'extérieur grâce à un dispositif électronique.

9. Chariot pour charges et/ou transport selon la revendication 4, **caractérisé en ce que** les deux roues avant (2a, 2aa ; 2b, 2bb) ne sont entraînées que par un moteur qui est relié aux roues par l'intermédiaire d'un engrenage différentiel.

10. Chariot pour charges et/ou transport selon la revendication 1, **caractérisé en ce qu'**une surface de chargement (48) se trouvant sur un capot (47) d'un ou de plusieurs accumulateurs (27 ; 27a) est associée à la plateforme de chargement (4 ; 4a).

11. Chariot pour charges et/ou transport selon la revendication 10, **caractérisé en ce que** la surface de chargement (48) est dimensionnée de manière à ce qu'une caisse de boissons (49) ou deux caisses de boissons (49) puissent prendre place sur la surface de chargement (48) en étant empilées l'une sur l'autre.

12. Chariot pour charges et/ou transport selon la revendication 10, **caractérisé en ce qu'**un sac à provisions (50) peut être installé sur la surface de chargement (48), ledit sac pouvant lui-même être replié grâce à un fil élastique et présentant deux anses (51, 51a), qui peuvent être accrochées de manière graduelle en fonction de la quantité de marchandises aux crochets (52, 52a) se faisant face et se trouvant sur les arbres de direction (21a, 21aa ; 21b, 21bb), le sac à provisions (50) pouvant être accroché graduellement sur les arbres de direction (21a, 21aa ; 21b, 21bb) par l'intermédiaire de coulisses orientables et verrouillables.

13. Chariot pour charges et/ou transport selon la revendication 10, **caractérisé en ce qu'**un panier pour bébé (53) ou un siège pour un petit enfant peut être intégré sur la surface de chargement (48).
